# EUROPEAN PATENT SPECIFICATION

(11) **EP 2 002 718 B1**
(45) Date of publication and mention of the grant of the patent: **24.03.2010**
(21) Application number: 08425363.2
(22) Date of filing: 21.05.2008
(51) Int. Cl.: A01K 95/00

(54) **Weighting device for fishing line**
Angelblei für Angelschnur
Plombée pour ligne de pêche

(30) Priority: 22.05.2007 IT MN20070021
(43) Date of publication of application: 17.12.2008
(73) Proprietor: Gollo, Francesco, 46010 Curtatone (MN) (IT)
(72) Inventor: Gollo, Francesco, 46010 Curtatone (MN) (IT)
(74) Representative: Petazzi, Guido

(56) References cited:
- EP-A- 0 882 396
- GB-A- 2 191 373
- US-A- 5 661 923

## Description

The present invention relates to a weighting device for fishing line, particularly indicated for use in bottom fishing, for (freshwater) carp fishing technique and for surfcasting (in the sea).

As it is known, freshwater bottom fishing is the simplest fishing technique in existence and it has been practiced since ancient times. This technique consists in placing a weight (a sinker) at the end of the line, so that the hook covered by the bait stays lying on the bed until a fish (e.g. carp, tench, barbel, chub, catfish, eel, etc...) grubbing for food on the bed, gets hooked. The dimensions of the sinker, the lines and the hooks vary depending on the type of water in which one decides to fish and depending on the type of fish.

In bottom fishing, as in carp fishing (a particular fishing technique used to catch carp), it is necessary to use line weighting devices, which must be quite heavy in order to be able to anchor the line to the bottom and keep it there.

In fact, for example. if one is fishing in slow river water or in lakes, one can use light sinkers (15-20-30g), while if one is fishing in areas with strong currents, larger sinkers (50-60-80g) are needed.

Additionally, surfcasting is a fishing method that is carried out on the beach, using rods capable of casting the end complex (bait and sinker) considerably far from the shore. The surfcasting technique exploits tidal movement, which can produce, through its alternation, significant underwater turbulence near the coast. This turbulence, moving the sandy bed with a circular motion, creates a zone which is particularly rich in food, from microorganisms to larger-sized animals (squids and crabs), which are the base of the diet of "grubbing" and "predatory" fish, both large and small. In particular, large predatory fish, which are the targets of this type of fishing, venture into those swells in search of food constituted of the organisms present or bait fish grazing in that zone. To reach these fish-rich zones, it is necessary to be able to cast out the bait with the hook very far, and make them settle and remain on the bed until the fish, swallowing them, gets hooked.

The weighting devices currently available on the market (commonly called sinkers) may have different shapes: ball, ogive, droplet, soap-bar, torpedo, coin, hexagonal, pyramid, olive, etc.

In particular, in bottom fishing, carp-fishing and surfcasting there are essentially two types of sinkers: those called "in line" and those with a ring or swivel.

In more detail, the "in line" type sinkers are mounted directly onto the mother line, which runs along a through-hole which runs the entire length of the sinker.

The sinkers with the ring and/or swivel feature an upper ring to which the mother line is tied or with which a swivel is engaged, to which - in its turn - the line is tied.

In particular, the ring and/or swivel can be hooked onto a small spring catch to which the line is tied. Furthermore, in the majority of cases, the ring present on the sinker engages with a specific clip which is sealed using a cap made of a plastic material. The line is then fixed to the clip.

The sinkers outlined earlier, while performing their task, nevertheless, present various drawbacks.

A first drawback derives from the fact that when the "in line" type sinkers need to be replaced because a different shaped or weight sinker is needed, they prove particularly laborious to remove and refit. This situation is due to the fact that the angler, when carrying out certain operations, often has wet or viscid hands from touching a fish or numb hands if fishing in the cold season, which is why his manual skill proves limited and, consequently, it becomes difficult to insert a thin line into a hole which is quite small, in addition to the fact that the line is not rigid which means is often hits the sides of the hole, rendering the aforesaid operations even more exacting. To overcome this difficulty, the angler tends to have a section of line always inserted in the hole with swivels or rings at the ends for linking up to the mother line.

A second drawback encountered with the "in line" type sinker is due to the fact that the sinkers are unbalanced by the bait during casting, so the casting distance is reduced.

A further drawback emerges from the fact that, over time, the line tends to wear as a result of running inside the axial hole, with risk of snapping. A drawback encountered with the sinkers with the ring derives from the fact that this type of sinker features scarce embedding ability following hooking due to delay before the resistance is offered by the sinker, so there is a risk that the fish will have time to free itself from the hook.

A still further drawback which emerges derives from the fact it is easy to lose the sinker both after the fish has eaten and during casting, upon impact with the water, so easy is it that, in some cases, the angler ends up tying the sinker to the clip in order not to risk losing it.

A further drawback identified occurs in the event that the mother line snaps and the sinker is tied to the clip, the fish cannot free itself from the sinker and therefore it continues to drag it, with effort and suffering, until it dies.

The drawbacks outlined above are present in all three fishing techniques, i.e. bottom fishing, carp fishing and surfcasting.

The aim of the present invention is essentially to resolve the problems of the commonly known technique, overcoming the drawbacks by means of a weighting device for fishing line able to allow a user to exchange the device, simply and easily, with one with a different form and weight.

A second aim of the present invention is to realise a weighting device for fishing line able to ensure rapid embedding following hooking due to the immediate resistance offered by the sinker during fishing.

A third aim of the present invention is to realise a weighting device for fishing line which it is impossible to lose uniess the mother line snaps, in order to reduce to the maximum the possibility of polluting material remaining in the water.

A third aim of the present invention is to realise a weighting device for fishing line which, in the event that the mother line snaps, allows the fish not to remain anchored to the sinker.

A still further aim of the present invention is to realise a weighting device for fishing line, particularly indicated for use in carp-fishing and surfcasting but which is also perfectly suitable for other angling techniques without losing its characteristic solidity and practicality.

A further but not final aim of the present invention is to realise a weighting device for fishing line which is easy to manufacture and works well.

These aims and others besides, which will better emerge over the course of the present description, are essentially achieved by means of a weighting device for fishing line, as outlined in the claims below.

Further characteristics and advantages will better emerge in the detailed description of a weighting device for fishing line according to the present invention, provided in the form of a non-limiting example, with reference to the accompanying drawings, in which:
- figure 1 shows, schematically and from a perspective view, a weighting device for fishing line as per the present invention.
- figures 2A, 2B and 2C show various embodiments of the weighting device in question;
- figure 3 shows a lateral, partially sectioned view of the device in question in operative conditions;
- figure 4 shows a lateral, partially sectioned view of the device in question in different operative conditions.

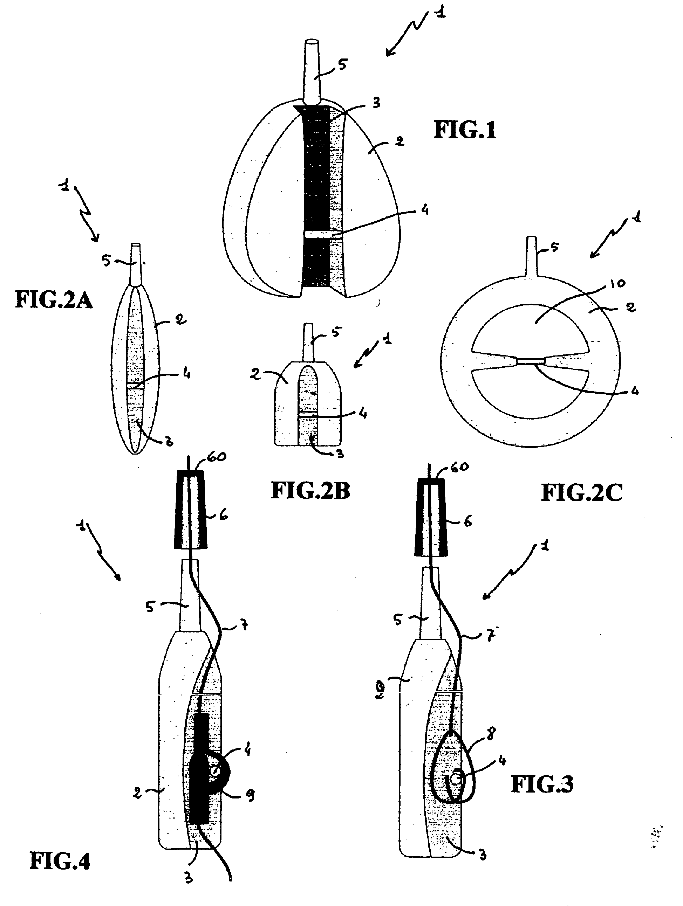

With reference to the figures, and in particular figure 1, 1 denotes, as a whole, a weighting device for fishing line according to the present invention.

The weighting device for fishing line 1 is essentially constituted of a structure 2, made of a metal material with a flattened droplet configuration, which - along its vertical axis - features a groove 3, endowed with at least one bridging element 4, envisaged to link the two sides of the groove and whose function will be outlined later.

According to the present invention, structure 2 features, in an essentially known fashion, a multitude of configurations: ball, ogive, droplet, soap-bar, torpedo, coin, hexagonal, pyramid, olive, etc.

As mentioned earlier, structure 2 is realised with a metallic material and, in particular, lead, and can be covered eternally with a coating made of a plastic material to camouflage it against the bottom or within the environment of the river or sea, since the metal might shine and, consequently, scare off the fish, and to protect it against oxidation and blows against stones on the bed.

In addition to what is outlined above, structure 2 may be endowed with small lugs which allow the structure not to be dragged by the current.

According to the present invention, structure 2 is, likewise, equipped with a pin 5 located on the top thereof, in position with the end of the groove 3, and envisaged to house a cap 6 made of a plastic material or rubber. In more detail, cap 6 features an essentially cone trunk configuration which is hollow internally and has hole 60 in position with the vertex of the cone, designed for the line to run through it.

In addition to what is outlined above, bridge 4 is realised with a metallic or plastic material and is envisaged to create a restriction to the movement of a line 7 which is inserted in groove 3 in such a way that it cannot come out therefrom and is then secured with cap 6.

Furthermore, bridge 4 can have a fastening element fixed to it, such as a small spring catch 8, to which the line is fixed, as shown in figure 4, or clip 9 with which the line is engaged, as shown in figure 3.

In addition to what is outlined above, structure 2 may feature lightening holes 10, as shown in figure 2C.

According to the present invention, structure 2 features one or more bridging elements 4, envisaged to better retain line 7 and, furthermore, structure 2 may be endowed with several bridges without groove 3.

Device 1, in question, is devised to be used by starting from a resting condition, in which it is inactive and detached from a line, and switching to an operative condition, in which it is engaged with the line, either directly or by means of a fastening element.

After the predominantly structural description above, the operation of the invention in question will now be outlined.

When a user wishes to go bottom fishing or carp-fishing or surfcasting, he must simply take a structure 2 and first run the line through hole 60 in cap 6 and then insert it into the groove, running it under bridge 4 and tying it thereto; lastly the cap must be placed on the pin to prevent movement of the line. Furthermore, when the user wishes to use a fastening element, he must simply carry out the operations outlined earlier and tie the end of the line which is in the groove to a spring catch 8 or a clip 9 and engage it to the bridge.

At this point the user can prepare the other parts of which his fishing rod and equipment are composed.

When the user has to change the sinker, he must simply release the fastening element from the bridge and take off the cap to release the line, pulling it out of the groove and then repeat the operations with another sinker with a different form and/or weight in order to resume the angling session.

Thus the present invention achieves the aims set.

In fact, the weighting device for fishing line is able to allow a user to exchange the device, simply and easily, with one with a different form and weight.

Furthermore, the device in question is able to ensure rapid embedding following hooking due to the immediate resistance offered by the sinker during fishing.

Furthermore, with the present weighting device, the bait does not unbalance it, so there are no problems concerning the desired casting distance.

Advantageously, the device according to the present invention is impossible to loose in the event that the mother line snaps, and in particular, if the mother line should snap, it allows the fish not to remain anchored to the sinker and suffer. Furthermore, with the present device, the risk of dispersing polluting material in both freshwater and seawater are reduced drastically, i.e. almost totally eliminated.

The weighting device for fishing line in question is particularly indicated for use in carp-fishing and surfcasting, as well as bottom fishing, but is also perfectly suitable for other angling techniques, without losing its characteristic solidity and practicality.

In addition to what is stated above, the device proves very versatile and is perfectly suitable for any type of fastening element.

A further advantage of the present invention derives from the fact that it can be easily and quickly attached to and detached from the line by the user, even with wet or viscid hands, unlike with sinkers that employ the commonly known technique.

A further but not final advantage of the present invention is that it proves remarkable easy to use and to manufacture and works well.

Naturally, further modifications or variants may be applied to the present invention while remaining within the scope of the invention that characterises it.

## Claims

1. A weighting device for fishing line, **characterised by** the fact that the said device essentially comprises a structure (2), of any conformation, endowed with a groove (3) located along the vertical axis and endowed with at least one bridging element (4) envisaged to link the two sides of the groove, the said structure (2) featuring a pin (5) located on the top thereof and in position with the end of the groove and envisaged to house a cap (6) designed to secure a line (7), the said device being devised to be used by starting from a resting condition, in which it is inactive and detached from a line, and switching to an operative condition, in which it is engaged with the line, either directly or by means of a fastening element (8).

2. A weighting device for fishing line, according to claim 1, **characterised by** the fact that the said structure (2) is realised with a metallic material and, in particular, lead, and can be covered eternally with a coating made of a plastic material to camouflage it against the bottom and to protect it against oxidation and blows.

3. A weighting device for fishing line, according to claim 1, **characterised by** the fact that the said bridge (4) is realised with a metallic or plastic material and is envisaged to create a restriction to the movement of a line (7), which is inserted in the groove (3) in such a way that it cannot come out therefrom and is then secured with the cap (6).

4. A weighting device for fishing line, according to claim 1, **characterised by** the fact that the said cap (6), made of a plastic material or rubber, features an essentially cone trunk configuration, which is hollow internally and has a hole (60) in position with the vertex of the cone designed for the line to run through it.

5. A weighting device for fishing line, according to claim 1, **characterised by** the fact that the said bridge (4) can have a fastening element fixed to it, such as a small spring catch (8) or a clip (9) with which the line is engaged.

6. A weighting device for fishing line, according to claim 1, **characterised by** the fact that the said structure (2) features lightening holes (10).

7. A weighting device for fishing line, according to claim 1, **characterised by** the fact that the said structure (2) features a multitude of configurations: ball, ogive, droplet, soap bar, torpedo, coin, hexagonal, pyramid, olive, etc.

8. A weighting device for fishing line, according to claim 1, **characterised by** the fact that the said structure (2) is endowed with small lugs which allow the structure not to be dragged by the current.

## Patentansprüche

1. Ballastvorrichtung für Angelschnur, **dadurch gekennzeichnet, dass** sie im Wesentlichen eine Konstruktion (2) beliebiger Form mit einer Nut (3) entlang der senkrechten Achse umfasst und mindestens mit einem Brückenelement (4) ausgestattet ist, das zur Verbindung der beiden Seiten der Nut dient, diese Konstruktion (2) einen Zapfen (5) oberhalb und am Ende der Nut aufweist sowie zur Aufnahme einer Kappe (6) vorgesehen ist, die zum Befestigen einer Angelschnur (7) dient; da die Vorrichtung zur Bedienung aus einer Ruhestellung entworfen wurde, in der sie inaktiv ist, ist sie von der Angelschnur (7) bis zu einem Funktionszustand gelöst, in dem sie einfach direkt oder mittels eines Befestigungselements (8) mit der Angelschnur verbunden wird.

2. Ballastvorrichtung für Angelschnur gemäß Patentanspruch 1, **dadurch gekennzeichnet, dass** diese Konstruktion (2) aus Metall besteht, d.h. im Besonderen Blei, sowie außen von einer Kunststoffumhüllung abgedeckt sein kann, um sie dem Boden ähnlich zu machen und zu tarnen, sowie sie vor Oxidation und Stößen zu schützen.

3. Ballastvorrichtung für Angelschnur gemäß Patentanspruch 1, **dadurch gekennzeichnet, dass** die genannte Brücke (4) aus Metall oder Kunststoff besteht sowie dazu dient, eine Begrenzung für die Bewegung der Angelschnur (7) zu bilden, die in die Nut (3) eingelegt, ohne dass sie daraus austreten kann, und dann mit der Kappe (6) befestigt wird.

4. Ballastvorrichtung für Angelschnur gemäß Patentanspruch 1, **dadurch gekennzeichnet, dass** die genannte Kappe (6) aus Kunststoff oder Gummi besteht und im Wesentlichen die Form eines im Inneren hohlen Kegelstumpfes mit einer Bohrung (60) an der Spitze des Kegels aufweist, die zur Durchführung der Angelschnur dient.

5. Ballastvorrichtung für Angelschnur gemäß Patentanspruch 1, **dadurch gekennzeichnet, dass** an der genannten Brücke (4) ein Befestigungselement angebracht werden kann, wie ein kleiner Karabinerhaken (8) oder eine Klemme (9), an der die Angelschnur befestigt wird.

6. Ballastvorrichtung für Angelschnur gemäß Patentanspruch 1, **dadurch gekennzeichnet, dass** die genannte Konstruktion (2) Bohrungen zur Erleichterung an (10) aufweist.

7. Ballastvorrichtung für Angelschnur gemäß Patentanspruch 1, **dadurch gekennzeichnet, dass** die genannte Konstruktion (2) eine Vielzahl von Konfiguration aufweist: in Kugel-, Ogiven-, Tropfen-, Seifen-, Torpedo-, Münz-, Sechskant-, Pyramiden-, Olivenform usw. aufweisen kann.

8. Ballastvorrichtung für Angelschnur gemäß Patentanspruch 1, **dadurch gekennzeichnet, dass** die genannte Konstruktion (2) über kleine Nadeln verfügt, die verhindern, dass die Konstruktion durch die Strömung mitgenommen wird.

## Revendications

1. Dispositif de lest pour ligne de pêche **caractérisé par le fait qu'**il comprend substantiellement une structure (2), d'une conformation quelconque, munie d'un rainurage (3) situé le long de l'axe vertical et équipé d'au moins un élément à pont (4) prévu pour unir les deux côtés du rainurage ; ladite structure (2) présentant un axe (5) situé sur le dessus et au niveau de l'extrémité du rainurage et prévu pour recevoir un capuchon (6) destiné à bloquer une ligne (7), le dispositif étant conçu pour opérer d'une condition de repos durant laquelle il était inactif, est détaché de la ligne (7), à une condition opérationnelle dans laquelle il est engagé à la ligne simplement ou au moyen d'un élément d'accrochage (8).

2. Dispositif de lest pour ligne de pêche selon la revendication 1, **caractérisé par le fait que** ladite structure (2) est réalisée dans un matériau métallique et en particulier en plomb et qu'elle peut être recouverte à l'extérieur d'un revêtement en matière plastique pour qu'elle puisse être confondue et se mimétiser sur le fond et pour la préserver de l'oxydation et des chocs.

3. Dispositif de lest pour ligne de pêche selon la revendication 1, **caractérisé par le fait que** ledit pont (4) est réalisé dans un matériau métallique ou en plastique et qu'il est prévu pour créer une contrainte de l'actionnement de la ligne (7) qui est introduite dans le rainurage (3) sans pouvoir en sortir et elle est ensuite bloquée par le capuchon (6).

4. Dispositif de lest pour ligne de pêche selon la revendication 1, **caractérisé par le fait que** ledit capuchon (6), réalisé en matière plastique ou en caoutchouc, présente une configuration essentiellement en tronc de cône, creux à l'intérieur, et avec un trou (60) au niveau du sommet du cône destiné à faire passer le fil de la ligne.

5. Dispositif de lest pour ligne de pêche selon la revendication 1, **caractérisé par le fait qu'**on peut fixer au dit pont (4) un élément d'accrochage, comme un petit mousqueton (8) ou une clip (9), dans lequel est engagée la ligne.

6. Dispositif de lest pour ligne de pêche selon la revendication 1, **caractérisé par le fait que** ladite structure (2) présente des trous d'allégement (10).

7. Dispositif de lest pour ligne de pêche selon la revendication 1, **caractérisé par le fait que** ladite structure (2) présente une multitude de configurations : en bille, en ogive, en goutte, en savonnette, en torpille, en pièce de monnaie, hexagonales, en pyramide, en olive, etc.

8. Dispositif de est pour ligne de pêche selon la revendication 1, **caractérisé par le fait que** ladite structure (2) est munie de petites saillies qui permettent à la structure de ne pas être entraînée par le courant.
